# EUROPEAN PATENT SPECIFICATION

(11) **EP 0 331 714 B1**
(45) Date of publication and mention of the grant of the patent: **06.07.1994**
(21) Application number: 88908602.1
(22) Date of filing: 01.09.1988
(51) Int. Cl.: B41J 2/175, B41J 2/21, G01D 15/16

(54) **HOT MELT INK SUPPLY UNIT**
HEISSSCHMELZENDE TINTENZUFUHREINHEIT
UNITE D'ALIMENTATION EN ENCRE THERMOFUSIBLE

(30) Priority: 09.09.1987 US 94661
(43) Date of publication of application: 13.09.1989
(73) Proprietor: SPECTRA, INC., Hanover, NH 03755 (US)
(72) Inventor: CREAGH, Linda, T., West Lebanon, NH 03784 (US); SPEHRLEY, Charles, W., Jr., White River Junction, VT 05001 (US); HINE, Nathan, P., East Thetford, VT 05043 (US); CRANSTON, Dean, H., Lebanon, NH 03766 (US); MACDONALD, Jack, B., Dedham, MA 02026 (US)
(74) Representative: Jackson, Peter Arthur
(86) International application number: US8803073
(87) International publication number: WO8902575

(56) References cited:
- US-A- 2 480 207
- US-A- 2 946 207
- US-A- 4 631 557
- US-A- 4 641 154
- US-A- 4 739 339
- No further documents located.

## Description

This invention relates to arrangements for storing and supplying unit quantities of hot melt ink for use in hot melt ink printing systems and, more particularly, to a new and improved hot melt ink supply unit which effectively protects the hot melt ink during storage and transit and permits delivery of the ink in a simple and convenient manner to a molten ink reservoir without contamination.

In printing systems which use inks that are solid at room temperature and melted by heating for application to an ink-receiving substrate, such as certain ink jet printing systems, the solid ink must be delivered to a molten ink reservoir associated with the printing system in such a way that contamination of the ink is avoided. In addition, where different colored inks are contained in different reservoirs in the printing system, care must be taken to assure that ink of the proper color is delivered to the corresponding reservoir. Furthermore, exposure of the operator to molten ink splashed from the reservoir when solid ink is delivered must be avoided.

Heretofore, hot melt ink has been supplied to reservoirs in ink jet systems by selective heating of ink in a replaceable cartridge as described, for example, in U.S.-A-4,631,557, by selective heating of an ink block as described in U.S.-A-4,593,292, or by advancing ink pellets or granules toward the reservoir by a complex pellet drive or granule conveyer system as described in U.S.-A-4,636,803 and US-A-4,667,206. Those arrangements, however, require either melting of the ink in a cartridge or block outside the reservoir to transfer ink into the reservoir or necessitate complicated mechanical advancing and delivery systems to move pellets or granules from a supply into a reservoir. Thus, the prior art does not permit simple and convenient manual loading of individual solid hot melt ink supply units without exposing the solid ink to potential contamination and the operator to possible injury from splashing of molten ink in the reservoir.

According to a first aspect of the present invention, there is provided a hot melt ink supply unit comprising a block of solid hot melt ink having a keyed peripheral configuration and a handle removably connected to the block of hot melt ink and separable therefrom upon relative motion between the handle and the block.

According to a second aspect of the present invention, there is provided a method for delivering a block of solid hot melt ink having a keyed peripheral configuration to a reservoir having a keyed opening conforming to the keyed peripheral configuration, the method comprising providing a handle separably connected to the block of hot melt ink, inserting the hot melt ink into the opening in the reservoir, and imparting relative motion between the handle and the block of hot melt ink so as to separate the handle from the block.

In the accompanying drawings:
Fig. 1 is a transverse cross-sectional view illustrating a representative embodiment of a hot melt ink supply unit and container arranged in accordance with the present invention;
Fig. 2 is a perspective view illustrating the hot melt ink supply unit of Fig. 1 partially removed from the container; and
Fig. 3 is a perspective view illustrating the manner in which the hot melt ink supply unit of Fig. 1 is inserted into a typical molten ink reservoir and separated from the handle member.

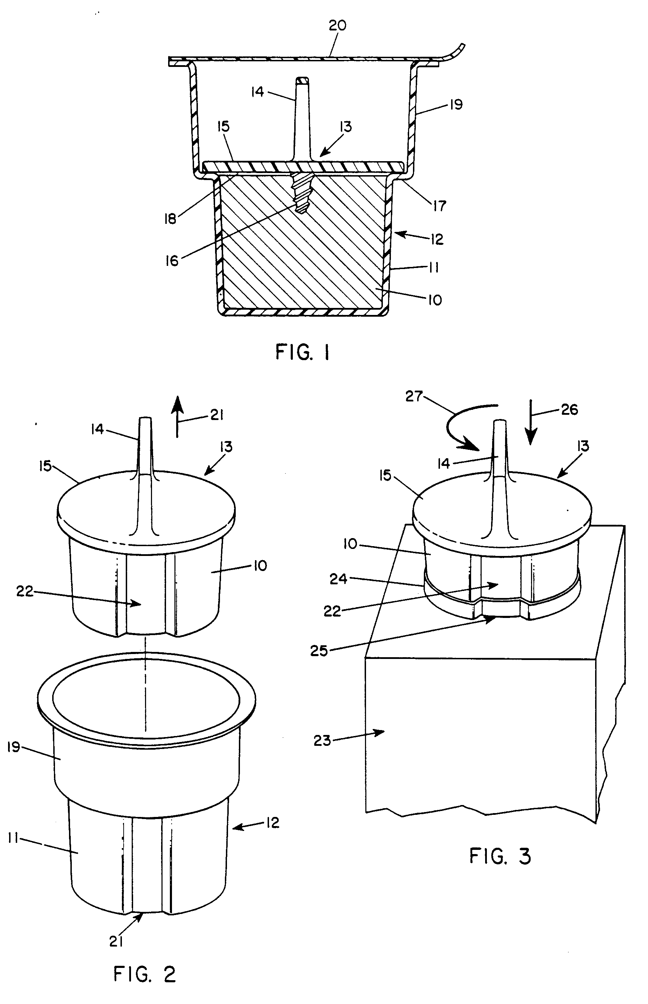

In the representative embodiment of a hot melt ink supply unit in accordance with the invention shown in Fig. 1, a solid block 10 of hot melt ink is disposed in the lower portion 11 of a cup-shaped container 12. A handle member 13 consisting of an upwardly projecting handle 14, a disc-shaped splash guard 15 and a threaded central projection 16 is seated on a shoulder 17 in the wall of the cup-shaped container 12. The shoulder 17 is located and handle member 13 is formed so that the projection 16 extends downwardly a short distance into the solid ink block 10 disposed in the lower portion of the container and a narrow space 18 separates the top of the block 10 and the splash guard 15. The handle member 13 may be made of any material, such as plastic or metal, to which the ink block 10 does not strongly adhere.

In order to provide a releasable connection between the ink block 10 and the handle member 13 by means of the threaded projection 16 while maintaining a space 18 between the ink block and the splash guard 15 in a convenient manner, a measured quantity of the ink is preferably introduced into the lower portion 11 of the container 12 in molten form so as to reach a level just below the shoulder 17 and the handle member 14 is positioned with the projection 16 inserted into the molten ink and the splash guard 15 resting on the shoulder 17, after which the ink is solidified.

In a typical arrangement for holding 20cc of solid ink, the lower portion 11 of the container is approximately 32mm in diameter and the shoulder 17 is approximately 25mm from the bottom of the container. To facilitate separation of the handle member 13 from the ink block, the threaded projection, which is tapered by about 10°, extends approximately 6.4mm into the ink block and the thread on the projection is at an angle of about 45° to the axis of the projection.

To avoid the possible introduction of contaminants into the container 12 during storage and shipment, the container includes an upper portion 19 which surrounds the handle member 13 and the opening at the top of the cup-shaped container is sealed by a layer 20 of plastic sheet material which may be peeled off when the ink supply unit is to be removed and used. Preferably, the container 12 is made of transparent or translucent plastic material and the wall of at least the lower portion 11 is shaped with a slight taper, for example, 2°, to facilitate removal of the block of solid ink. In addition, the material of which the container is made should have a low adherence to the ink and should preferably be slightly resilient to facilitate separation of the ink block from the container.

The ink supply unit is removed from the container 12 by separating the sealing sheet 20 and pulling upwardly on the handle 14 without twisting while holding the container, as indicated by the arrow 21 in Fig. 2. As shown in Fig. 2, the lower portion 11 of the container 12 has a keyed peripheral configuration which, in the illustrated embodiment, consists of a recess 21 having a specific angular extent, such as 30°. As a result, a correspondingly shaped recess 22 is formed in the block 10 to provide a keyed shape which can be received in a correspondingly keyed opening in the reservoir which is to receive the ink block. By providing a different key configuration for each color of ink, and correspondingly different key configurations for the ink reservoirs, the possibility of supplying ink of the wrong color to a reservoir is positively prevented. For example, two or more recesses narrower than the recess 21 may be provided at differing peripheral angles in other ink supply units so that none of them can be received in the reservoir opening conforming to any other key configuration.

In Fig. 3, a heated reservoir portion 23 of a hot melt ink printing system, which may contain molten hot melt ink, is illustrated schematically. The reservoir 23 has an ink-receiving opening provided with a collar 24 which is formed with a key comprising an inward projection 25 corresponding in shape to the recess 22 providing the key in the periphery of the block of hot melt ink 10. To supply the ink block 10 to the reservoir after removal from the container 12, the recess 22 in the block is aligned with the inward projection 25 of the collar and the combined block and handle member are inserted downwardly into the reservoir in the direction of the arrow 26 in Fig. 3. When the splash guard 15 engages the top of the collar 24, the handle 14 is rotated in the counterclockwise direction as indicated by the arrow 27 so that the threaded portion 16 is turned to unscrew it from the block 10 while the block 10 is held in angularly fixed position. Preferably, the screw connection is designed so that approximately one-quarter turn of the handle is sufficient to release the handle member from the block of solid ink.

Since the splash guard 15 is held against the collar 24 during rotation, the angle of the thread on the projection 16 moves the block 10 downwardly as the handle is turned. Consequently, after the block 10 is disconnected from the handle member, it drops into the molten ink in the reservoir and the operator is protected from any resulting splash of the molten ink by the splash guard 15 which completely covers the opening in the collar 24. Thereafter, the reservoir opening may be closed by a cover (not shown) to avoid contamination of the ink in the reservoir.

Thus, the packaging, storage, transportation and removal of a block of hot melt ink and insertion of the hot melt ink into a reservoir containing molten ink is conveniently accomplished while avoiding contamination of the ink and danger to the operator from the hot melt ink in the reservoir.

Although the invention has been described herein with reference to a specific embodiment, many modifications and variations therein will readily occur to those skilled in the art. For example, the connection between the handle member and the block of hot melt ink, rather than being a single central threaded projection from the handle, might consist of several projections extending downwardly from the splash guard into the block at locations spaced from the center and into the ink block at an angle so that they are withdrawn from the block upon rotation of the handle.

## Claims

1. A hot melt ink supply unit comprising a block (10) of solid hot melt ink having a keyed peripheral configuration (22) and a handle (14) removably connected to the block of hot melt ink and separable therefrom upon relative motion between the handle and the block.

2. A hot melt ink supply unit according to claim 1, wherein the handle (14) includes splash guard (15) substantially covering the adjacent portion of the hot melt ink block (10).

3. A hot melt ink supply unit according to Claim 2 wherein the splash guard (15) is spaced from the adjacent portion of the hot melt ink block (10).

4. A hot melt ink supply unit according to any one of the preceding claims, including a container (12) enclosing the hot melt ink block (10) and the handle (14), and having a shape conforming to the keyed peripheral configuration of the hot melt ink block.

5. A hot melt ink supply unit according to claim 3 and claim 4, wherein the handle (14) is integral with the splash guard (15) and the container (12) includes a shoulder (17) abutting the splash guard.

6. A hot melt ink supply unit according to claim 4 or claim 5, including a seal (20) for sealing the container (12) so as to prevent contamination of the hot melt ink block (10).

7. A hot melt ink supply unit according to any one of claims 4 to 6, wherein the container (12) is cup shape and the seal (20) is a removable sheet member covering the opening in the cup-shaped container.

8. A hot melt ink supply unit according to any one of the preceding claims, wherein the handle (14) includes at least one element (16) projecting into the hot melt ink block (10) and withdrawable from the block by rotation of the handle with respect to the block.

9. A hot melt ink supply unit according to claim 8, wherein the projecting element (16) is threaded.

10. In combination, a hot melt ink supply unit according to any one of the preceding claims, and a hot melt ink reservoir (23) having a keyed opening conforming to the keyed peripheral configuration of the hot melt ink supply unit.

11. A combination according to claim 10, wherein the block (10) of hot melt ink and the reservoir (23) are shaped to restrain rotation of the block about an axis parallel to the direction of introduction of the block into the reservoir, and the handle (14) is removable from the block by rotation about that axis.

12. A plurality of hot melt ink supply units, each according to any one of the preceding claims, and each having ink of a different colour and a different keyed peripheral configuration corresponding to the colour of the ink.

13. In combination, a plurality of hot melt ink supply units according to claim 12 and a corresponding plurality of ink reservoirs (23) having keyed openings conforming to the keyed peripheral configurations of the hot melt ink supply units.

14. A method for delivering a block (10) of solid hot melt ink having a keyed peripheral configuration to a reservoir (23) having a keyed opening conforming to the keyed peripheral configuration, the method comprising providing a handle (14) separably connected to the block of hot melt ink, inserting the hot melt ink into the opening in the reservoir, and imparting relative motion between the handle and the block of hot melt ink so as to separate the handle from the block.

15. A method according to claim 14, wherein the relative motion comprises rotation of the handle (14) with respect to the block (10).

## Patentansprüche

1. Zuführeinheit für heißschmelzende Tinte, die einen Block (10) aus verfestigter, heißschmelzender Tinte, die eine verschlüsselte Umfangskonfiguration (22) besitzt, und eine Handhabe (14) aufweist, die entfernbar mit dem Block aus heißschmelzender Tinte verbunden und davon trennbar unter einer relativen Bewegung zwischen der Handhabe und dem Block ist.

2. Zuführeinheit für heißschmelzende Tinte gemäß Anspruch 1, wobei die Handhabe (14) einen Spritzschutz (15) umfaßt, der im wesentlichen den benachbarten Bereich des Block (10) aus heißschmelzender Tinte abdeckt.

3. Zuführeinheit für heißschmelzende Tinte gemäß Anspruch 2, wobei der Spritzschutz (15) von dem benachbarten Bereich des Blocks (10) aus heißschmelzender Tinte beabstandet ist.

4. Zuführeinheit für heißschmelzende Tinte gemäß einem der vorhergehenden Ansprüche, die einen Behälter (12) umfaßt, der den Block (10) aus heißschmelzender Tinte und die Handhabe (14) umschließt und der eine Form besitzt, die der verschlüsselten Umfangskonfiguration des Blocks aus heißschmelzender Tinte angepaßt ist.

5. Zuführeinheit für heißschmelzende Tinte gemäß Anspruch 3 und Anspruch 4, wobei die Handhabe (14) integral mit dem Spritzschutz (15) aufgebaut ist und der Behälter (12) eine Schulter (17) umfaßt, die gegen den Spritzschutz anliegt.

6. Zuführeinheit für heißschmelzende Tinte gemäß Anspruch 4 oder Anspruch 5, die eine Dichtung (20) zum Abdichten des Behälters (12) umfaßt, um eine Kontamination des Blocks (10) aus heißschmelzender Tinte zu verhindern.

7. Zuführeinheit für heißschmelzende Tinte gemäß einem der Ansprüche 4 bis 6, wobei der Behälter (12) becherförmig aufgebaut ist und die Dichtung (20) ein entfernbares, folienförmiges Teil ist, das die Öffnung in dem becherförmigen Behälter abdeckt.

8. Zuführeinheit für heißschmelzende Tinte gemäß einem der vorhergehenden Ansprüche, wobei die Handhabe (14) mindestens ein Element (16) umfaßt, das in den Block (10) aus heißschmelzender Tinte vorsteht und aus dem Block durch Drehung der Handhabe im Hinblick auf den Block herausziehbar ist.

9. Zuführeinheit für heißschmelzende Tinte gemäß Anspruch 8, wobei das vorstehende Element (16) mit einem Gewinde versehen ist.

10. Kombination einer Zuführeinheit für heißschmelzende Tinte gemäß einem der vorhergehenden Ansprüche und eines Reservoirs (23) für heißschmelzende Tinte, das eine schlüsselförmige Öffnung besitzt, die der verschlüsselten Umfangskonfiguration der Zuführeinheit für heißschmelzende Tinte angepaßt ist.

11. Kombination gemäß Anspruch 10, wobei der Block (10) aus heißschmelzender Tinte und das Reservoir (23) so geformt sind, um eine Drehung des Blocks um eine Achse parallel zu der Richtung der Einführung des Blocks in das Reservoir zu behindern, und wobei die Handhabe (14) aus dem Block durch Drehung um die Achse entfernbar ist.

12. Eine Mehrzahl von Zuführeinheiten für heißschmelzende Tinte, wobei jede gemäß einem der vorhergehenden Ansprüche aufgebaut ist und jede Tinte einer unterschiedlichen Farbe und eine unterschiedliche, verschlüsselte Umfangskonfiguration entsprechend der Farbe der Tinte besitzt.

13. Kombination einer Mehrzahl von Zuführeinheiten für heißschmelzende Tinte gemäß Anspruch 12 und eine entsprechende Mehrzahl von Tintenreservoiren (23), die verschlüsselte Öffnungen besitzen, die der verschlüsselten Umfangskonfiguration der Zuführeinheiten für heißschmelzende Tinte angepaßt sind.

14. Verfahren zur Zuführung eines Blocks (10) aus verfestigter, heißschmelzender Tinte, der eine verschlüsselte Umfangskonfiguration besitzt, zu einem Reservoir (23), das eine verschlüsselte Öffnung besitzt, die der verschlüsselten Umfangskonfiguration angepaßt ist, wobei das Verfahren die Bildung einer Handhabe (14), die gesondert mit dem Block aus heißschmelzender Tinte verbunden wird, Einsetzen der heißschmelzenden Tinte in die Öffnung in dem Reservoir und Ausübung einer Relativbewegung zwischen der Handhabe und dem Block aus heißschmelzender Tinte, um so die Handhabe von dem Block zu trennen, umfaßt.

15. Verfahren nach Anspruch 14, wobei die relative Bewegung eine Drehung der Handhabe (14) im Hinblick auf den Block (10) umfaßt.

## Revendications

1. Unité d'alimentation en encre thermofusible comprenant un bloc (10) d'encre thermofusible solide qui présente une configuration périphérique indexée (22) et une poignée (14) connectée de manière amovible au bloc d'encre thermofusible et susceptible d'en être séparée suite à un mouvement relatif entre la poignée et le bloc.

2. Unité d'alimentation d'encre thermofusible selon la revendication 1, dans laquelle la poignée (14) comprend un protecteur anti-éclaboussures (15) qui couvre sensiblement la partie adjacente du bloc d'encre thermofusible (10).

3. Unité d'alimentation d'encre thermofusible selon la revendication 2, dans laquelle le protecteur anti-éclaboussures (15) est écarté de la partie adjacente du bloc d'encre thermofusible (10).

4. Unité d'alimentation d'encre thermofusible selon l'une quelconque des revendications précédentes, comprenant un conteneur (12) qui enferme le bloc d'encre thermofusible (10) et la poignée (14), et qui a une forme qui épouse la configuration périphérique indexée du bloc d'encre thermofusible.

5. Unité d'alimentation d'encre thermofusible selon la revendication 3 et la revendication 4, dans laquelle la poignée (14) est formée en une pièce avec le protecteur anti-éclaboussures (15), et le conteneur (12) comprend un épaulement (17) en butée contre le protecteur anti-éclaboussures.

6. Unité d'alimentation d'encre thermofusible selon l'une ou l'autre des revendications 4 et 5, comprenant un joint (20) destiné à étancher le conteneur (12) de manière à empêcher la contamination du bloc d'encre thermofusible (10).

7. Unité d'alimentation d'encre thermofusible selon l'une quelconque des revendications 4 à 6, dans laquelle le conteneur (12) a la forme d'un godet, et le joint (20) consiste en un élément en feuille amovible qui couvre l'ouverture dans le conteneur en forme de godet.

8. Unité d'alimentation d'encre thermofusible selon l'une quelconque des revendications précédentes, dans laquelle la poignée (14) comprend au moins un élément (16) faisant saillie à l'intérieur du bloc d'encre thermofusible (10) et susceptible d'être extrait hors du bloc par rotation de la poignée par rapport au bloc.

9. Unité d'alimentation d'encre thermofusible selon la revendication 8, dans laquelle l'élément (16) faisant saillie est fileté.

10. Combinaison d'une unité d'alimentation d'encre thermofusible selon l'une quelconque des revendications précédentes, et d'un réservoir à encre thermofusible (23) qui présente une ouverture indexée adaptée à la configuration périphérique indexée de l'unité d'alimentation d'encre thermofusible.

11. Combinaison selon la revendication 10, dans laquelle le bloc (10) d'encre thermofusible et le réservoir (23) sont conformés de manière à restreindre la rotation du bloc autour d'un axe parallèle à la direction d'introduction du bloc dans le réservoir, et la poignée (14) peut être enlevée du bloc par rotation autour de cet axe.

12. Pluralité d'unités d'alimentation d'encre thermofusible, réalisée chacune selon l'une quelconque des revendications précédentes, et comportant chacune de l'encre d'une couleur différente et une configuration périphérique indexée différente qui correspond à la couleur de l'encre.

13. Combinaison d'une pluralité d'unités d'alimentation d'encre thermofusible selon la revendication 12 et d'une pluralité correspondante de réservoirs à encre (23) qui présentent des ouvertures indexées épousant les configurations périphériques indexées des unités d'alimentation d'encre thermofusible.

14. Procédé pour alimenter un bloc (10) d'encre thermofusible solide présentant une configuration périphérique indexée, dans un réservoir (23) ayant une ouverture indexée adaptée à la configuration périphérique indexée, ledit procédé comprenant les étapes consistant à fournir une poignée (14) connectée de manière séparable au bloc d'encre thermofusible, à introduire l'encre thermofusible dans l'ouverture dans le réservoir, et à appliquer un déplacement relatif entre la poignée et le bloc d'encre thermofusible de manière à séparer la poignée vis-à-vis du bloc.

15. Procédé selon la revendication 14, dans lequel le déplacement relatif consiste en une rotation de la poignée (14) par rapport au bloc (10).
